# FASCICULE DE BREVET EUROPEEN

(11) **EP 1 048 792 B1**
(45) Date de publication et mention de la délivrance du brevet: **19.01.2005**
(21) Numéro de dépôt: 00420067.1
(22) Date de dépôt: 06.04.2000
(51) Int. Cl.: E02F 9/28

(54) **Dispositif pour lier des pièces d'usure aux outils montés sur les engins de travaux publics**
ANORDNUNG ZUR VERBINDUNG VON VERSCHLEISSFESTEN TEILEN AN AUF BAUMASCHINEN BEFESTIGTEN WERKZEUGEN
ARRANGEMENT FOR CONNECTING WEAR MEMBERS TO TOOLS MOUNTED ON CONSTRUCTION MACHINES

(30) Priorité: 19.04.1999 FR 9905068
(43) Date de publication de la demande: 02.11.2000
(73) Titulaire: Pasqualini, Charles, F-42110 Feurs (FR); Pasqualini, Jean Marc, F-69440 Mornant (FR); Pasqualini, Sylvain, F-62380 Lumbres (FR); Feurst S.A., 42110 feurs (FR); AFE METAL (Société Anonyme), F-42110 Feurs (FR)
(72) Inventeur: Pasqualini, Charles, 42100 Feurs (FR); Pasqualini, Jean Marc, 69440 Mornant (FR); Pasqualini, Sylvain, 62380 Lumbres (FR); Ducrot, Alain, 42560 Gumieres (FR)
(74) Mandataire: Dupuis, François

(56) Documents cités:
- EP-A- 0 618 334
- WO-A-94/18401
- US-A- 3 019 537
- US-A- 3 410 010
- US-A- 5 068 986

## Description

L'invention se rattache aux secteurs techniques des équipements d'engins de travaux publics présentant des bennes, godets ou autres réceptacles susceptibles de venir racler, prélever des matériaux ou autres en vue de leur évacuation d'un lieu donné vers d'autres postes opératoires, à l'aide d'engins et matériels de travaux publics.

Les demandeurs ont déjà développé un dispositif et procédé de liaison des pièces d'usure dans les applications précitées, qui ont fait l'objet d'un brevet européen délivré 618.334.

Succinctement, le dispositif de liaison des pièces d'usure telles que dents amovibles et adaptateurs formés aux extrémités d'outils et réceptacles est remarquable en ce que la dent et l'adaptateur sont pourvus sur au moins une ou leurs faces de contacts et/ou dans leur épaisseur avec une ou des configurations additionnelles pour constituer des zones et volumes d'introduction, de logement, de retenue et d'enlèvement d'un matériau de remplissage mis en place après montage préalable de la dent sur l'adaptateur pour constituer au moins dans ces zones un contact absolu entre la dent et l'adaptateur, permettant à ce dernier d'accepter les contraintes et sollicitations sur de plus grandes surfaces, le matériau étant sous forme fluide et à capacité d'auto-déformation, ledit matériau en se solidifiant assurant les fonctions de liaison et de maintien entre la dent et l'adaptateur.

La ou les configurations additionnelles des zones de logement destinées au remplissage et retenue du matériau ont pour fonction de fixer la ou les masses de matériau élastique pour être capable de jouer en compression, en expansion pendant la transmission à l'adaptateur des contraintes mécaniques multidirectionnelles que reçoit la dent pendant son travail.

Le dispositif précité prévoit aussi l'adjonction d'une clavette participant à la liaison de l'ensemble.

Le dispositif précité et le procédé s'y rapportant défini dans le brevet EP 618.334 ont fait l'objet d'expérimentations complémentaires compte tenu des contraintes existantes, qui apparaissent et résultent de l'exploitation du brevet précité.

Les expérimentations complémentaires sont également applicables à d'autres types de liaison dent / adaptateur utilisant un moyen de liaison par clavette. L'utilisation de clavettes est bien connue en soi et les demandeurs l'ont rappelé et cité de nombreux exemples dans ce brevet européen précité.

Dans le cadre de leurs recherches, les demandeurs ont souhaité optimiser la mise en oeuvre du dispositif de liaison des pièces d'usure dent sur adaptateur par des configurations très particulières permettant l'obtention d'assemblages très performants.

Lesdites recherches et expérimentations ont permis ainsi de développer et sélectionner des formes spécifiques de la dent et l'adaptateur et de la clavette de liaison éliminant tout risque de perte de clavette en service, assurant des conditions faciles pour le montage et le changement des dents in situ avec à chaque changement l'obtention systématique de la même qualité d'assemblage que celle initiale.

Un autre but recherché selon l'invention était la conception et la sélection d'un matériau de remplissage dans sa nature et ses caractéristiques.

Selon une première caractéristique, le dispositif de liaison entre des pièces d'usure du type dent-adaptateur aux extrémités d'outils et réceptacles en usage sur les engins et matériels de travaux publics, du type où la dent et l'adaptateur sont pourvus sur au moins une ou leurs faces de contact, et/ou dans leur épaisseur avec une ou des configurations additionnelles pour constituer des zones et volumes d'introduction, de logement, de retenue et d'enlèvement d'un matériau de remplissage après montage préalable de la dent sur l'adaptateur, avec l'adjonction d'une clavette pour constituer un contact entre la dent, l'adaptateur et la clavette, se ***caractérise*** en ce que :
_ la clavette disposée verticalement, présente une configuration curviligne en segment, d'épaisseur décroissante dans sa direction d'insertion, ladite clavette ayant une configuration en coupe transversale en L, ladite clavette comprenant des zones constituant des zones d'ancrage dans le matériau élastique de remplissage, ladite clavette étant agencée dans sa partie basse avec une forme assurant la fonction de bouchon lors de la mise en place dudit matériau ;
_ la dent est agencée sur ses faces supérieure et inférieure avec des ouvertures périphériques conformées symétriques pour autoriser le passage de la clavette par le bas, lesdites ouvertures comprenant des profils symétriques pour l'introduction du matériau de remplissage, le guidage, le blocage et le maintien à étanchéité de la clavette profilée en L ;
_ l'adaptateur est agencé avec des ouvertures profilées de passage de la clavette formant un conduit et ayant une configuration curviligne intérieure arrière pour suivre sans contact la forme de la clavette, le conduit comprenant des formes rentrantes dans ledit conduit constituant des zones possibles d'appui momentané de la clavette en cas d'efforts extrêmes d'arrachement de la dent.

Ces caractéristiques et d'autres encore ressortiront bien de la suite de la description.

Pour fixer l'objet de l'invention illustré d'une manière non limitative aux figures des dessins où :

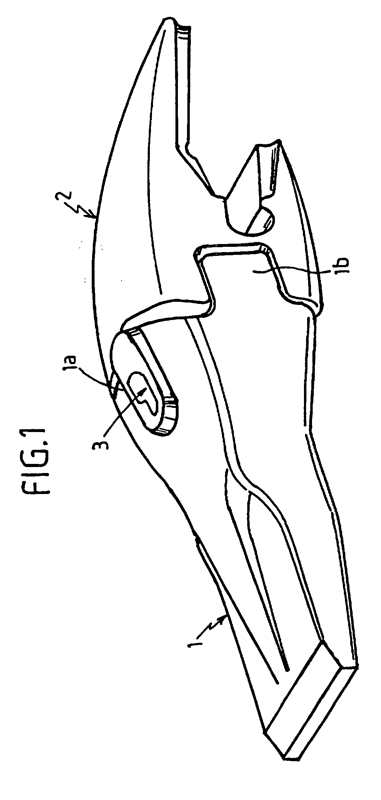

- la figure 1 est une vue d'un ensemble de pièces d'usure dent sur adaptateur avec clavette profilée selon l'invention ;
- la figure 2 est une vue en perspective de la clavette spécifique en vue de côté arrière ;
- la figure 3 est une vue en perspective de ladite clavette spécifique en vue de côté avant ;
- les figure 3a, 3b, 3c sont des vues partielles illustrant les sections de la clavette selon les lignes A-A, B-B, C-C ;

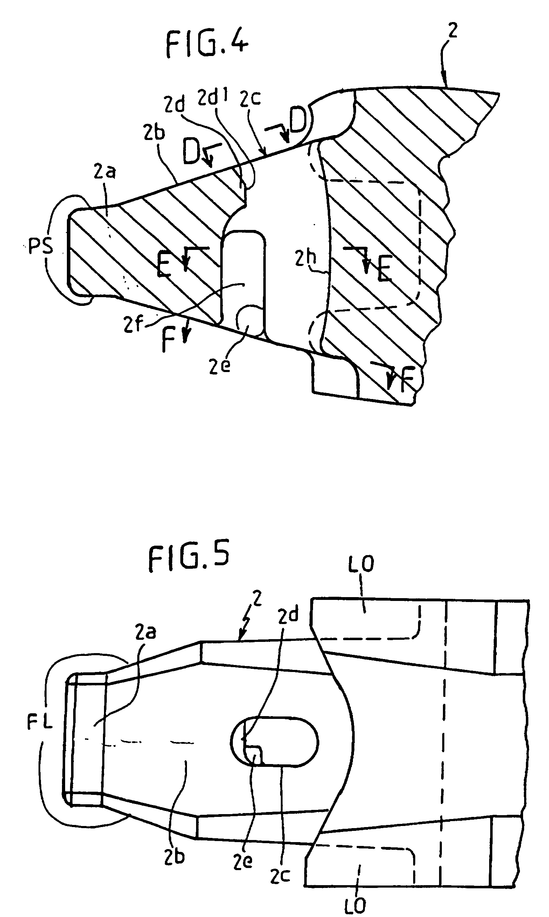

- la figure 4 est une vue en coupe longitudinale de l'adaptateur en montrant les formes spécifiques intérieures relatives à la zone de passage de la clavette ;
- la figure 5 est une vue de dessus selon la figure 4 ;
- les figures 5a, 5b, 5c sont des vues partielles et en coupe pour la figure 5b, selon les flèches D-D, E-E, F-F de la figure 4 ;

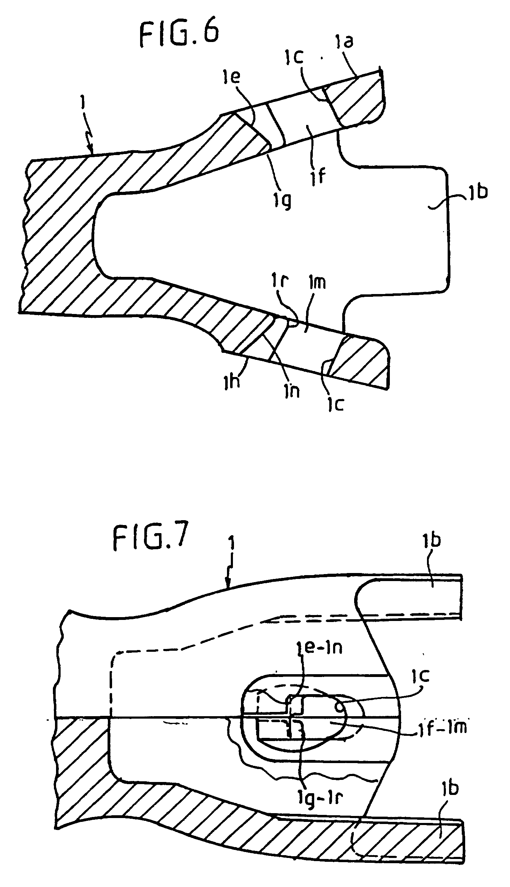

- la figure 6 est une vue en coupe de la dent et de ses profils intérieurs permettant le passage et la mise en place de la clavette ;
- la figure 7 est une vue de dessus selon la figure 6 ;

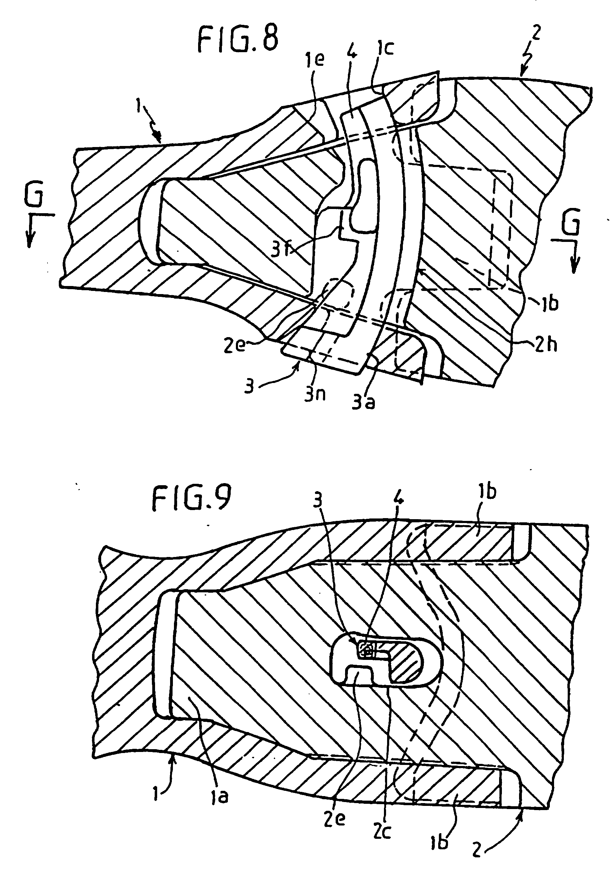

- la figure 8 est une vue en coupe montrant l'assemblage du dispositif selon l'invention ;
- la figure 9 est une vue de dessus en coupe selon la ligne G-G selon la figure 8.

Afin de rendre plus concret l'objet de l'invention, on le décrit maintenant d'une manière non limitative illustrée aux figures des dessins.

Le dispositif d'assemblage pour pièces d'usure dans les applications considérées met en oeuvre quatre composants à savoir : une dent (1), un adaptateur (2), une clavette (3) et un matériau élastique de remplissage (4), ce dernier étant destiné à assurer la liaison ferme de l'ensemble ainsi constitué pour répondre aux contraintes mécaniques résultant des sollicitations rencontrées lors de l'utilisation desdites pièces d'usure sur les engins et matériels de travaux publics, et assurer la tenue de la clavette en service.

Nous décrirons chacun des trois éléments constitutifs clavette, dent, adaptateur dont les formes sont très spécifiques résultant de la recherche d'optimisation de l'ensemble pour offrir les meilleures performances d'assemblage.

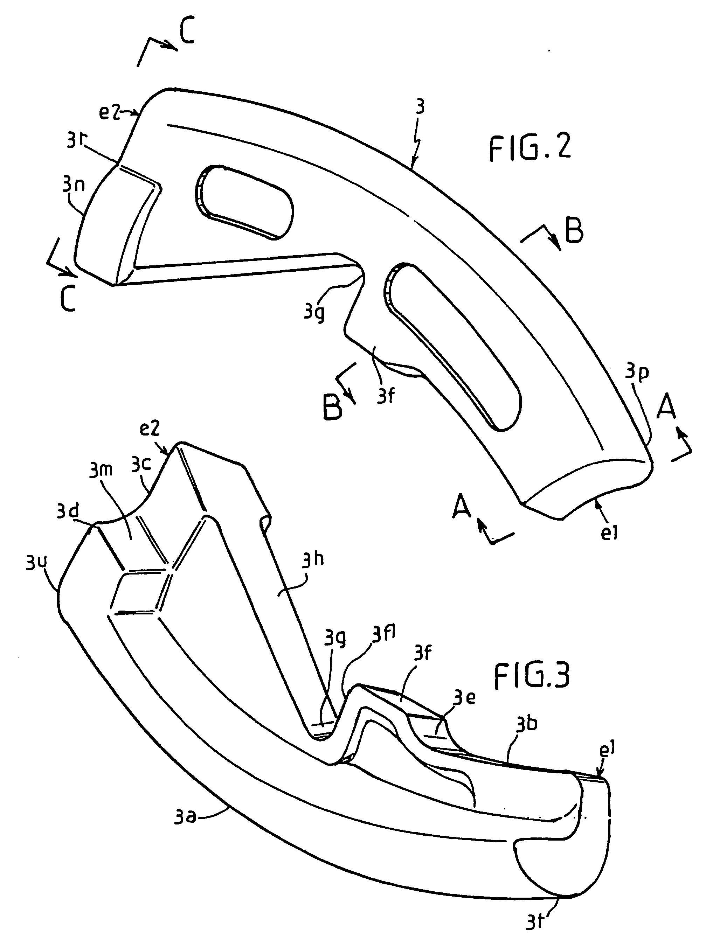

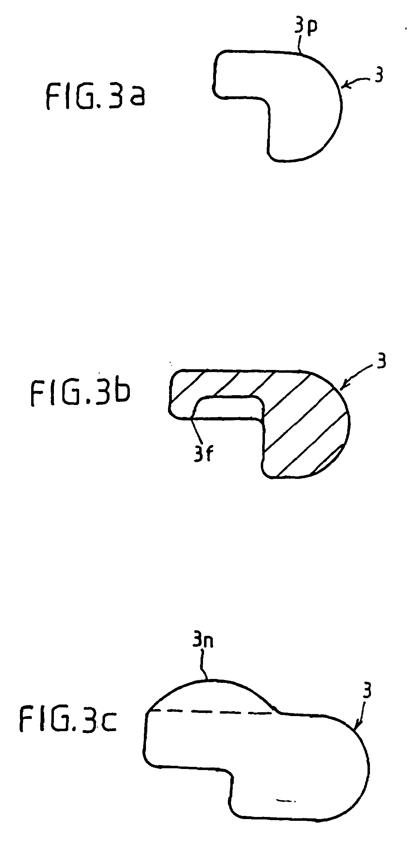

La clavette (3) présente, comme représenté aux dessins, une configuration curviligne en segment, d'épaisseur croissante (e) avec une section (e1) dans la partie haute de la clavette se situant dans la partie supérieure de liaison dent / adaptateur et une section (e2) supérieure à la section (e1) dans la partie basse de la liaison dent / adaptateur. La clavette présente une bordure (3a) curviligne sur toute sa longueur établie sur une partie seulement de sa largeur en laissant apparaître une zone (3b) destinée à être en regard de la partie avant de l'assemblage. On obtient ainsi, comme représenté figure 3a, à partir du haut de l'assemblage, une section transversale en L. Dans sa partie basse (3c), la clavette présente, au droit de la bordure longitudinale curviligne, un renflement (3d) dont la partie supérieure est susceptible de constituer un tampon ou bouchon lors de la mise en place du matériau élastique de remplissage et de liaison. La clavette présente, dans sa partie supérieure, une première bande munie, sur sa face intérieure, d'un évidement (3e) destiné à constituer une zone d'insert du matériau de remplissage. Cet évidement (3e) présente une configuration non rectiligne pour constituer ainsi des zones d'ancrage du matériau. Dans sa partie médiane, la clavette présente une forme en talon (3f) dont la face inférieure (3f1) est sensiblement parallèle à l'axe médian horizontal de la clavette lorsque celle-ci est positionnée entre la dent et l'adaptateur. Ce talon crée une forme en retrait (3g) qui est ensuite raccordée par un nervurage oblique (3h) avec la base inférieure (3m) de la clavette. L'orientation oblique est suffisamment marquée pour donner une configuration spécifique à la manière d'une crosse de fusil. Sur la face latérale de la clavette, la base inférieure présente un renflement (3n) partiel constituant une zone complémentaire de fermeture avec la dent ainsi qu'il apparaîtra par la suite. Les chants supérieur et inférieur (3p, 3r) de la clavette ne sont pas parallèles et ont une configuration oblique s'orientant vers l'extrémité de la dent.

Le profil très spécifique de la clavette a pour but de conférer à celle-ci les fonctionnalités et avantages suivants :
- La forme curviligne la rend compatible avec les systèmes d'assemblage de dent / adaptateur dans lesquels est prévu un mouvement réduit possible de la dent dans un plan vertical lors des efforts de cavage.
- Cette forme curviligne permet une augmentation de la longueur de la clavette et de sa surface d'appui réduisant ainsi la pression exercée sur la masse du matériau de remplissage.
- Une réduction du risque de chute intempestive de la clavette lors du montage et avant introduction du matériau de remplissage.
- Le vide formé par la section en L de la clavette crée le canal d'introduction et d'écoulement du matériau élastique de remplissage.

Un autre avantage réside dans le fait que la base inférieure (3m) assure une fonction de bouchon au matériau élastique de remplissage.

De par la forme de la clavette, celle-ci est détrompée et ne peut être placée à l'envers. Elle se met en place en étant introduite par l'ouverture inférieure de la dent et ne peut pas sortir de l'assemblage par le haut.

Pour se trouver solidarisée à la dent et ainsi remplir ses conditions de service, la clavette constitue par sa forme spécifique, trois zones de butée et de coincement par rapport à la dent, à savoir : les extrémités supérieure (3t) et inférieure (3u) et par sa partie avant oblique (3h), et ce dans une situation de triangulation.

La configuration spécifique de la clavette avec des zones de crantage (3e - 3f) dans le matériau élastique de remplissage ont pour but d'agir dans ledit matériau respectivement en compression et en cisaillement pour s'opposer à la pression des matériaux du haut vers le bas qui peut s'appliquer sur l'extrémité de la clavette dont la surface a été établie à une valeur minimale et assurer la tenue optimale recherchée en service.

Il y a lieu de décrire les caractéristiques de la dent qui sont établies à partir du profil de la clavette. La dent (1) présente ainsi, dans son plan d'extrémité supérieure (1a), de part et d'autre de ses oreilles latérales (1b), une ouverture (1f) permettant le passage de la clavette profilée précitée. L'ouverture présente une forme pentée (1e) orientée obliquement qui sert de conduit d'introduction du matériau élastique de remplissage, avec une zone d'appui (1c) de ladite clavette, dans sa configuration en L. Ladite ouverture (1f) formée sur la dent permet de définir également un talon (1g) face auquel viendra en regard la zone (3b) de la clavette, par son extrémité supérieure.

La face inférieure (1h) de la dent présente, à son tour, une ouverture profilée (1m) permettant l'engagement de la clavette par le bas. Cette ouverture (1m) profilée présente également une partie pentée (1n) orientée en opposition de la partie pentée supérieure précitée, et elle permet l'appui et le positionnement de la nervure oblique (3h) établie sur la clavette qui se trouve de ce fait mise en contact en (1c). L'ouverture inférieure est profilée pour former également un talon (1r) adjacent à la partie pentée mais de pente différente pour s'adapter en regard des formes (3m) de la clavette. En d'autres termes, les ouvertures supérieure et inférieure formées sur les parois de la dent, sont conformées symétriquement pour autoriser spécifiquement le montage de la clavette, sa mise en position et son coincement en position de service, de manière à parfaitement solidariser la clavette et la dent, tout en créant, sur la face supérieure, un canal d'introduction du matériau élastique de remplissage et en obturant l'ouverture inférieure avec possibilité de réversibilité de la dent.

Il convient dès lors d'exposer la configuration spécifique de l'adaptateur.

L'adaptateur (2) présente un nez (2a) à double pente avec un angle aval (2b) donnant le niveau de résistance requise par rapport à la section critique définie par l'axe R-R, situé en avant de l'ouverture permettant le passage de la clavette. Il comprend un angle amont (2c) d'amplitude plus réduit et permettant d'assurer la jonction avec la partie supérieure de l'adaptateur.

Il comporte à l'avant deux plats de stabilisation (PS) et à l'arrière les logements des oreille de la dent (LO) qui coopèrent pour gérer les efforts verticaux transmis par la dent. Il dispose de deux zones de contact latéral (FL) qui constituent ses faces d'appui permanent avec la dent.

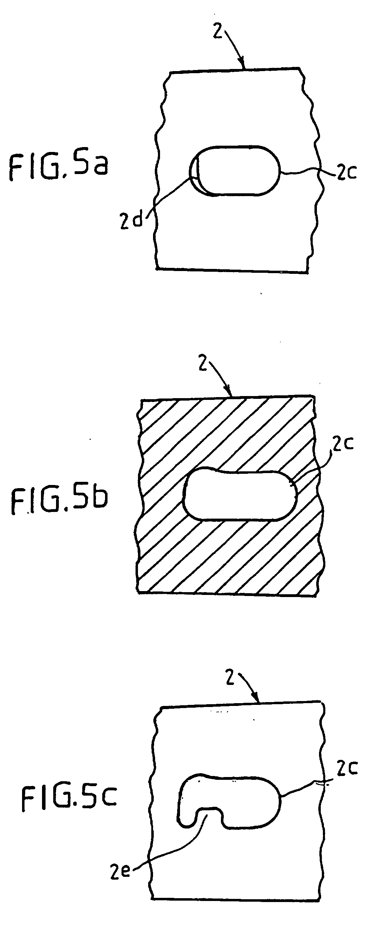

Selon la spécificité de l'adaptateur, ce dernier est agencé de sorte que la clavette soit positionnée en situation la plus arrière dans la zone la plus massique et donc robuste de l'adaptateur. Par ailleurs, des zones en saillie supérieure (2d ) et inférieure (2e) sont établies en débouchant dans le volume intérieur du nez de l'adapteur recevant la clavette. La zone en saillie supérieure (2d) par sa face apparente (2d1) de la zone en saillie constitue une zone possible d'appui momentané de la clavette, dans le cas d'efforts extrêmes d'arrachement de la dent. La zone (2e) est établie sous forme de bossage et se situe dans la partie inférieure du nez de l'adapteur. Elle constitue également une zone possible d'appui momentané de la clavette dans le cas d'efforts extrêmes d'arrachement de la dent. Intérieurement, celui-ci présente une chambre (2f) dont les sections successives sont représentées aux figures 5a, 5b, 5c des dessins. La partie intérieure arrière du logement de la clavette dans l'adaptateur présente une configuration curviligne (2h) pour suivre sans contact la forme de la clavette. Cette disposition contribue en rapprochant des oreilles de la dent le pivot que constitue le clavetage, à diminuer l'amplitude de déplacement horizontal de la dent permis par le jeu latéral.

En se référant aux figures des dessins, on voit que le remplissage des cavités dans l'ensemble formé par les dents, adapteur et clavette permet d'obtenir une liaison optimisée avec une parfaite tenue de la clavette.

Un avantage spécifique réside dans le fait que la clavette n'est enlevable que par le bas de la structure d'ensemble. Son positionnement vertical est rendu facile par les différentes zones de guidage. Les différentes sections à pans coupés formant rampe permettent de contribuer à l'obtention d'une étanchéité totale du matériau de remplissage.

Ledit matériau de remplissage totalement confiné occupe la totalité du volume disponible dans l'interface clavette adaptateur et la partie supérieure de la dent et n'a aucune possibilité de s'échapper d'une manière ou d'une autre. Dans le cas d'efforts extrêmes d'arrachement de la dent, la mise en compression du matériau de remplissage par l'appui de la clavette amène ledit matériau à un état de raideur progressive créant une force d'opposition extrême élevée avec rétablissement élastique de la position normale de tous les éléments (dent, adaptateur, clavette), dès que cesse la contrainte d'arrachement de la dent.

Le volume prévu dans la chambre (2f) est défini pour donner la quantité de matériau nécessaire pour faire office de tampon élastique, assurer le crantage de la clavette et également pour réaliser un effet de masse permettant une auto-suffisance thermique de prise dans le cas des mises en oeuvre hivernales avec matériau élastique de remplissage disposant d'une réaction exothermique de polymérisation.

Selon une autre caractéristique de l'invention, le matériau élastique de remplissage est choisi et sélectionné dans les matières suivantes :

Il peut être soit :
_ un système polyuréthanne mono ou bicomposants constitué à partir de polyols, isocyanates et/ou prépolymères ;
_ un système polyorganosiloxane de la famille des élastomères silicones RTV (Room Temperature Vulcanizing), mono ou bi-composants, obtenu par hydrolyse et polycondensation des chlorosilanes avec ajouts d'agents réticulants et de charges.

Leur dureté est comprise entre 50 et 80 Shore A.

On souligne encore la spécificité des formes de la clavette et de la dent et de l'adaptateur en résultant qui constituent une optimisation à l'utilisation du matériau de remplissage et de liaison défini précédemment.

Le changement de dent s'effectue d'une manière simple et rapide par une simple action de frappe sur la partie supérieure de la clavette qui est dégagée par le bas en provoquant l'arrachement du matériau élastique de remplissage. Ce dernier est facilement retiré par les formes profilées de l'adapteur, dans sa partie inférieure, prévues à cet effet, libérant ainsi le logement dans l'adaptateur rendu disponible pour le montage suivant.

## Revendications

1. Dispositif de liaison entre des pièces d'usure du type dent-adaptateur aux extrémités d'outils et réceptacles en usage sur les engins et matériels de travaux publics, du type où la dent et l'adaptateur sont pourvus sur au moins une ou leurs faces de contact, et/ou dans leur épaisseur avec une ou des configurations additionnelles pour constituer des zones et volumes d'introduction, de logement, de retenue et d'enlèvement d'un matériau de remplissage après montage préalable de la dent sur l'adaptateur, avec l'adjonction d'une clavette pour constituer un contact entre la dent, l'adapteur et la clavette, ledit dispositif étant ***caractérisé* en ce que** :
_ la clavette (3) disposée verticalement, présente une configuration curviligne en segment, d'épaisseur décroissante dans sa direction d'insertion, ladite clavette ayant une configuration en coupe transversale en L, ladite clavette comprenant des zones (3e,3f) constituant des zones d'ancrage dans le matériau élastique de remplissage (4), ladite clavette étant agencée dans sa partie basse avec une forme (3d) assurant la fonction de bouchon lors de la mise en place dudit matériau ;
_ la dent (1) est agencée sur ses faces supérieure (la) et inférieure (1b) avec des ouvertures périphériques conformées symétriques pour autoriser le passage de la clavette par le bas, lesdites ouvertures (1f-1m) comprenant des profils symétriques pour l'introduction du matériau de remplissage, le guidage, le blocage et le maintien à étanchéité de la clavette profilée en L ;
_ l'adaptateur (2) est agencé avec des ouvertures profilées de passage de la clavette formant un conduit et ayant une configuration curviligne (2h) intérieure arrière pour suivre sans contact la forme de la clavette, le conduit comprenant des formes rentrantes dans ledit conduit (2d,2e) constituant des zones possibles d'appui momentané de la clavette en cas d'efforts extrêmes d'arrachement de la dent.

2. Dispositif selon la revendication 1, **caractérisé en ce que** la clavette (3) présente une configuration curviligne en segment, d'épaisseur décroissante (e) avec une section (e1) dans la partie haute de la clavette se situant dans la partie supérieure de liaison dent/adaptateur et une section (e2) supérieure à la section (e1) dans la partie basse de la liaison dent/adaptateur, les chants supérieur et inférieur de la clavette n'étant pas parallèles et ayant une orientation oblique vers l'extrémité de la dent.

3. Dispositif selon l'une quelconque des revendications 1 et 2, **caractérisé en ce que** la clavette présente une bordure (3a) curviligne sur toute sa longueur établie sur une partie seulement de sa largeur en laissant apparaître une zone (3b) destinée à être en regard de la partie avant de l'assemblage définissant une section transversale en L, et **en ce que** le vide formé par la section en L de la clavette constitue le canal d'introduction et d'écoulement du matériau élastique de remplissage.

4. Dispositif selon la revendication 3, **caractérisé en ce que** la clavette présente :
_ dans sa partie basse (3c), au droit de la bordure longitudinale curviligne, un renflement (3d) dont la partie supérieure est susceptible de constituer un tampon ou bouchon ;
_ dans sa partie supérieure, une première bande munie, sur sa face intérieure, d'un évidement (3e) destiné à constituer une zone d'insert dans le matériau de remplissage ;
_ dans sa partie médiane, la clavette présente une forme en talon (3f) dont la face inférieure (3f1) est sensiblement parallèle à l'axe médian horizontal de la clavette lorsque celle-ci est positionnée entre la dent et l'adaptateur, ce dit talon créant une forme en retrait (3g) qui est ensuite raccordée par un nervurage oblique (3h) avec la base inférieure (3m) de la clavette.

5. Dispositif selon la revendication 4, **caractérisé en ce que** cet évidement (3e) présente une configuration non rectiligne pour constituer ainsi des zones d'ancrage du matériau.

6. Dispositif selon la revendication 4, **caractérisé en ce que** sur la face latérale de la clavette, la base inférieure présente un renflement (3n) partie constituant une zone complémentaire de fermeture avec la dent.

7. Dispositif selon l'une quelconque des revendications 1 à 6, **caractérisé en ce que** la clavette constitue par sa forme spécifique, trois zones de butée et de coincement par rapport à la dent, à savoir : les extrémités supérieure (3t) et inférieure (3u) et par sa partie avant oblique (3h), et ce dans une situation de triangulation.

8. Dispositif selon l'une quelconque des revendications 1 à 7, **caractérisé :**
_ **en ce que** la dent (1) comprend, dans son plan d'extrémité supérieure (1a), une ouverture (1c) de passage de la clavette, et présentant une forme pentée (1e) orientée obliquement avec une ouverture de guidage (1f) de ladite clavette, dans sa configuration en L supérieure, ladite ouverture (1f) formée sur la dent permettant de définir un talon (1g) vis à vis duquel vient en regard de la zone (3b) de la clavette, par son extrémité supérieure,
_ et **en ce que** la face inférieure (1h) de la dent comprend une ouverture profilée (1m) permettant l'engagement de la clavette par le bas, ladite ouverture (1m) profilée présentant une partie pentée (1n) orientée en opposition de la partie pentée supérieure (1e), et permettant l'appui et le positionnement de la nervure oblique (3h) établie sur la clavette, ladite ouverture inférieure étant profilée pour former un talon (lr) adjacent à la partie pentée mais de pente différente pour s'adapter en regard des formes (3m) de la clavette.

9. Dispositif selon l'une quelconque des revendications 1 à 8, **caractérisé en ce que** l'adaptateur est agencé de sorte que la clavette soit positionnée en situation la plus arrière dans sa zone la plus massique, des zones en saillie supérieure (2d) et inférieure (2e) étant établies en débouchant dans le volume intérieur du nez de l'adaptateur recevant la clavette, la zone (2e) étant établie sous forme de bossage et se situant dans la partie inférieure du nez de l'adaptateur, l'adapteur comprenant une chambre (2f) pour cette mise en place du matériau élastique de remplissage.

10. Dispositif selon l'une quelconque des revendications 1 à 9, **caractérisé en ce que** le matériau élastique de remplissage est un système polyuréthanne mono ou bicomposants constitué à partir de polyols, isocyanates et/ou prépolymères.

11. Dispositif selon l'une quelconque des revendications 1 à 9, **caractérisé en ce que** le matériau élastique de remplissage est un système polyorganosiloxane de la famille des élastomères silicones RTV (Room Temperature Vulcanizing), mono ou bi-composants, obtenu par hydrolyse et polycondensation des chlorosilanes avec ajouts d'agents réticulants et de charges.

## Claims

1. Arrangement for connecting wear parts of the tooth-adapter type at the ends of tools and receptacles in use on civil engineering vehicles and equipment, of the type in which the tooth and the adapter are provided, on their or at least one of their contact faces, and/or in their thickness, with one or more additional configurations to create regions and volumes for insertion, housing, retention and removal of a filling material after first mounting the tooth on the adapter, with the addition of a key to provide a contact between the tooth, the adapter and the key, the said arrangement being **characterized in that** :
- the key (3), arranged vertically, has a curvilinear segmental configuration of decreasing thickness in its direction of insertion, the said key being L-shaped in cross section, the said key comprising regions (3e, 3f) forming regions of anchorage in the elastic filling material (4), and the said key being provided in its lower part with a shape (3d) that acts as a plug when the said material is put into position;
- the tooth (1) is provided on its upper (1a) and lower (1b) faces with symmetrically shaped peripheral openings to allow the key to pass through the bottom, the said openings (1f-1m) comprising symmetrical profiles for the insertion of the filling material and for guiding and locking the L-profiled key and maintaining it in a leaktight position;
- the adapter (2) is provided with profiled openings for the passage of the key forming a channel and having a rear inner curvilinear configuration (2h) so as to follow the shape of the key without contact, the channel comprising shapes projecting into the said channel (2d, 2e) forming possible regions of temporary support for the key in case the tooth comes under extreme pull-out forces.

2. Arrangement according to Claim 1, **characterized in that** the key (3) has a curvilinear segmental configuration of decreasing thickness (e) with a section (e1) in the top part of the key situated in the upper or tooth/adapter connecting part and a section (e2) higher than the section (e1) in the lower part of the tooth/adapter connection, the upper and lower narrow edges of the key not being parallel and having an oblique orientation towards the end of the tooth.

3. Arrangement according to either of Claims 1 and 2, **characterized in that** the key has a curvilinear border (3a) running all the way along its length occupying only a part of its width and exposing a region (3b) designed to face the front part of the assembly defining an L cross section, and **in that** the void formed by the L cross section of the key forms the path for the introduction and flow of the elastic filling material.

4. Arrangement according to Claim 3, **characterized in that** the key has:
- in its lower part (3c), level with the curvilinear longitudinal border, a swelling (3d) whose upper part is able to act as a stopper or plug;
- in its upper part, a first band provided, on its inner face, with a recess (3e) designed as an insert region in the filling material;
- in its middle part, the key has a projecting shape (3f) whose lower face (3f1) is approximately parallel to the horizontal centre axis of the key when the key is positioned between the tooth and the adapter, the said projection creating a retracted shape (3g) which then runs into an oblique ribbing (3h) with the lower base (3m) of the key.

5. Arrangement according to Claim 4, **characterized in that** this recess (3e) has a non-rectilinear configuration in order thus to form anchoring regions for the material.

6. Arrangement according to Claim 4, **characterized in that** on the lateral face of the key, the lower base has a swelling (3n) part forming a complementary region of closure with the tooth.

7. Arrangement according to any one of Claims 1 to 6, **characterized in that** the key forms, by its specific shape, three regions of abutment and locking with respect to the tooth, namely: the upper end (3t) and lower end (3u) and by its oblique front part (3h), and this in a triangular situation.

8. Arrangement according to any one of Claims 1 to 7, **characterized :**
- **in that** the tooth (1) comprises, in its upper end plane (1a) , an opening (1c) for insertion of the key, and having a sloping shape (1e) oriented obliquely with a guide opening (1f) for the said key, in its upper L configuration, the said opening (1f) of the tooth making it possible to define a projection (1g) against which is facing the region (3b) of the key, by its upper end,
- and **in that** the lower face (1h) of the tooth comprises a profiled opening (1m) allowing engagement of the key through the bottom, the said profiled opening (1m) having a sloping part (1n) oriented in opposition to the upper sloping part (1e), and allowing contact by and positioning of the oblique rib (3h) formed on the key, the said lower opening being profiled to form a projection (1r) adjacent to the sloping part but of a different slope so as to match the shapes (3m) of the key.

9. Arrangement according to any one of Claims 1 to 8, **characterized in that** the adapter is designed so that the key is positioned in the rearmost position in its most massive region, upper (2d) and lower (2e) projecting regions leading into the internal volume of the nose of the adapter that receives the key, the region (2e) being in the form of a boss and being situated in the lower part of the adapter nose, the adapter comprising a chamber (2f) for this insertion of the elastic filling material.

10. Arrangement according to any one of Claims 1 to 9, **characterized in that** the elastic filling material is a one- or two-component polyurethane system consisting of polyols, isocyanates and/or prepolymers.

11. Arrangement according to any one of Claims 1 to 9, **characterized in that** the elastic filling material is a polyorganosiloxane system from the family of one- or two-component RTV (Room Temperature Vulcanizing) silicone elastomers and is obtained by hydrolysis and polycondensation of chlorosilanes with addition of crosslinking agents and fillers.

## Patentansprüche

1. Verbindungsvorrichtung zwischen verschleißfesten Teilen der Art Zacke und Adapter und den Enden von Werkzeugen und Aufnahmebehältern, die bei Baumaschinen und Baustoffen eingesetzt werden, wobei die Zacke und der Adapter an mindestens einer Kontaktfläche oder an allen Kontaktflächen bzw. in ihrer Tiefe eine oder mehrere zusätzliche Konfigurationen besitzen, welche Bereiche und Volumen zum Einführen, zur Aufnahme, für den Rückhalt und zum Entfernen von Füllmaterial nach vorheriger Montage der Zacke an dem Adapter besitzen, unter Ergänzung eines Keils, der einen Kontakt zwischen der Zacke, dem Adapter und dem Keil herstellt, wobei die Vorrichtung **dadurch gekennzeichnet ist, dass** :
- der vertikal angeordnete Keil (3) eine kurvenförmige Konfiguration mit in seiner Einschubrichtung abnehmender Stärke besitzt, wobei der Keil eine Konfiguration im L-förmigen Querschnitt aufweist und Bereiche (3e, 3f) besitzt, welche Verankerungszonen im elastischen Füllmaterial (4) bilden, wobei der Keil in seinem unteren Teil mit einer Form (3d) angeordnet ist, welche beim Einbringen des Materials die Funktion eines Stopfens besitzt ;
- die Zacke (1) an der Oberseite (1a) und an der Unterseite (1b) mit symmetrischen Umfangsöffnungen angeordnet ist, so dass der Keil von unten durchgeführt werden kann, wobei die Öffnungen (lf-1m) für die Einführung des Füllmaterials, die Führung, die Blockierung und das Dichthalten des Keils mit L-förmigem Profil symmetrische Profile besitzen ;
- der Adapter (2) mit profilierten Öffnungen für den Durchgang des Keils angeordnet ist, der ein Rohr bildet, das innen hinten eine kurvenförmige Konfiguration (2h) aufweist, um der Form des Keils zu folgen, ohne mit ihm in Berührung zu kommen,
wobei das Rohr Formen (2d, 2e) besitzt, die in das Rohr zurückgeführt werden, und mögliche Zonen für eine vorübergehende Abstützung des Keils bei extremen Abreisskräften der Zacke darstellen.

2. Vorrichtung nach Anspruch 1, **dadurch gekennzeichnet, dass** der Keil (3) eine kurvenförmige Konfiguration mit abnehmender Stärke (e) besitzt, wobei sich ein Abschnitt (e1) im oberen Teil des Keils im oberen Verbindungsteil Zacke/Adapter und ein Abschnitt (e2) oberhalb von Abschnitt (e1) im unteren Verbindungsteil Zacke/Adapter befindet, wobei die Oberkante und Unterkante des Keils nicht parallel verlaufen und zum Zackenende hin schräg ausgerichtet sind.

3. Vorrichtung nach einem der Ansprüche 1 und 2, **dadurch gekennzeichnet, dass** der Keil entlang seiner gesamten Länge und nur über einen Teil seiner Breite einen kurvenförmigen Rand (3a) besitzt, wobei ein Bereich (3b) gegenüber dem Vorderteil der Verbindung einen L-f-ormigen Querschnitt besitzt, und der Hohlraum, der von dem L-förmigen Querschnitt des Keils gebildet wird, den Einführ- und Abflusskanal für das elastische Füllmaterial darstellt.

4. Vorrichtung nach Anspruch 3, **dadurch gekennzeichnet, dass** der Keil folgendes aufweist :
- in seinem unteren Teil (3c) rechts von dem kurvenförmigen Längsrand eine Ausbauchung (3d), deren Oberteil einen Puffer oder Stopfen darstellen kann ;
- in seinem oberen Teil eine erste Bahn, die auf ihrer Innenseite mit einer Vertiefung (3e) versehen ist, welche eine Einsatzzone in das Füllmaterial darstellen soll;
- in seinem mittleren Bereich besitzt der Keil eine Stegform (3f), deren Unterseite (3f1) im wesentlichen parallel zur horizontalen Mittelachse des Keils verläuft, wenn sich dieser zwischen der Zacke und dem Adapter befindet, wobei der Steg einen vertieften Bereich (3g) erzeugt, der im Anschluss durch eine schräge Rippe (3h) mit der Unterseite (3m) des Keils verbunden ist.

5. Vorrichtung nach Anspruch 4, **dadurch gekennzeichnet, dass** diese Vertiefung (3e) eine nicht geradlinige Konfiguration aufweist, und auf diese Weise Verankerungszonen für das Material darstellt.

6. Vorrichtung nach Anspruch 4, **dadurch gekennzeichnet, dass** die Unterseite an der Keilseite eine Ausbauchung (3n) besitzt, die eine zusätzliche Zone für das Verschließen mit der Zacke darstellt.

7. Vorrichtung nach einem der Ansprüche 1 bis 6, **dadurch gekennzeichnet, dass** der Keil aufgrund seiner speziellen Form drei Anschlag- und Einklemmstellen gegenüber der Zacke bildet, nämlich : das obere (3t) und das untere Ende (3u) und die schräge Vorderseite (3h), und das Ganze in einer Triangulation (Dreieckform).

8. Vorrichtung nach einem der Ansprüche 1 bis 7, **dadurch gekennzeichnet, dass** :
- die Zacke ( 1 ) in der Ebene ihres oberen Endes (1a) eine Öffnung (1c) für den Durchgang des Keils besitzt und in seiner L-förmigen Konfiguration mit einer Führungsöffnung (1f) des Keils geneigt (1e) ist, wobei die Öffnung (1f) an der Zacke einen Steg (1g) bilden kann, dem gegenüber sich gegenüber der Zone (3b) der Keil mit seinem oberen Ende befindet,
- die Unterseite (1h) der Zacke eine Profilöffnung (1m) besitzt, die das Eingreifen des Keils von unten ermöglicht, wobei die Profilöffnung (1m) einen geneigten Teil (1n) besitzt, der gegenüber dem oberen geneigten Teil (1e) liegt, und die Abstützung und Positionierung der schrägen Rippe (3h), die sich auf dem Keil befindet, ermöglicht,
wobei die untere Öffnung so profiliert ist, dass sie einen Steg (1r) bildet, der an den geneigten Teil angrenzt, jedoch eine andere Neigung hat, so dass er sich an die Formen (3m) des Keils anpassen kann.

9. Vorrichtung nach einem der Ansprüche 1 bis 8, **dadurch gekennzeichnet, dass** der Adapter so angeordnet ist, dass der Keil in der hintersten Lage in der massigsten Zone positioniert wird, wobei die vorstehende obere (2d) und vorstehende untere (2e) Zone so eingerichtet ist, dass sie in das Innenvolumen der Nase des Adapters mündet, der den Keil aufnimmt, wobei die Zone (2e) Nockenform hat, und im unteren Teil der Nase des Adapters liegt, und der Adapter eine Kammer (2f) für das Einbringen des elastischen Füllmaterials besitzt.

10. Vorrichtung nach einem der Ansprüche 1 bis 9, **dadurch gekennzeichnet, dass** es sich bei dem elastischen Füllmaterial um ein Mono- oder Bikomponenten-Polyurethan-System handelt, das aus Polyalkoholen, Isocyanaten bzw. Vorpolymerisaten gebildet wird.

11. Vorrichtung nach einem der Ansprüche 1 bis 9, **dadurch gekennzeichnet, dass** es sich bei dem elastischen Füllmaterial um ein Polyorganosiloxan-System der Familie der Mono- oder Bikomponenten-RTV-Silikonelastomere [RTV = bei Raumtemperatur vulkanisierend] handelt, die man durch Hydrolyse und Polykondensation von Chlorsilanen mit Zusatz von Vernetzungsmitteln und Füllstoffen erhält.
